# EUROPÄISCHE PATENTSCHRIFT

(11) **EP 0 415 161 B1**
(45) Veröffentlichungstag und Bekanntmachung des Hinweises auf die Patenterteilung: **03.04.1996**
(21) Anmeldenummer: 90115476.5
(22) Anmeldetag: 11.08.1990
(51) Int. Cl.: H04Q 11/04, G06F 9/46, H04Q 3/545, G06F 9/00

(54) **Verfahren zum Verteilen von Nachrichten in einer rechnergesteuerten Anlage**
Method for the distribution of menages in a computer controlled installation
Procédé pour la distribution de messages dans une installation à commande par calculateur

(30) Priorität: 29.08.1989 DE 3928487
(43) Veröffentlichungstag der Anmeldung: 06.03.1991
(73) Patentinhaber: Alcatel SEL Aktiengesellschaft, D-70435 Stuttgart (DE)
(72) Erfinder: Kaufmann, Dieter, D-7252 Weil der Stadt (DE); Adolphi, Hans-Joachim, D-7000 Stuttgart 75 (DE)
(74) Vertreter: Pohl, Herbert, Dipl.-Ing

(56) Entgegenhaltungen:
- US-A- 4 418 396
- BRITISH TELECOMMUNICATIONS ENGINEERING Bd. 3, Nr. 4, Januar 1985, LONDON (GB) Seiten 226 - 240; TROUGHTON ET AL.: 'System X: The Processor Utility'
- FIFTH INTERNATIONAL CONFERENCE ON SOFTWARE ENGINEERING FOR TELECOMMUNICATION SWITCHING SYSTEMS Juli 1983, LUND (SE) Seiten 178 - 182; HAMMER ET AL.: 'A Distributed Operating System for the TCP16 System'

## Beschreibung

Der bekannte Stand der Technik erläutert bereits Verfahren zum Verteilen von Nachrichten in rechnergesteuerten Anlagen. Diese Anlagen oder Systeme sind so konfiguriert, daß 4 Prozessoren, auch CPU genannte, so miteinander verbunden sind, daß sie einen Multi-Prozessor bilden. Keiner der einzelnen Prozessoren dient dabei zur Ausführung nur einer speziellen Funktion, sondern jeder Prozessor besitzt einen verteilten Zugriff auf alle Peripherien und Speicher. Der Zugriff ist für alle Prozessoren gleich hoch priorisiert.

Die daraus bekannte Software teilt sich auf in eine Betriebssystem-Software und eine Applikations-Software. Die Betriebssystem-Software dient hierbei zur Zuteilung freier Prozessorleistung auf die verschiedenen Applikationen. Die zuvor genannte Betriebssystem-Software und die Applikations-Software ist wiederum in eine Vielzahl einzelner Einheiten aufgeteilt. Diese sogenannten Prozesse (processes) sind dabei in drei unterschiedliche Zustände (statusses) aufgeteilt.

Desweiteren existieren in dieser Anlage 8 Warteschlangen, von denen lediglich eine für ankommende Nachrichten (tasks) vorgesehen sind.

Die Bearbeitung in der Anlage funktioniert so, daß, wenn eine Prozeßsteuerung einen bestimmten Status erreicht in dem Rechenzeit benötigt wird, und auf einen freien Prozessor gewartet wird, die Nachricht einer beliebigen Warteschlange hinzugefügt wird. Ist der neu hinzugefügte Prozess von höherer Priorität als der aktive Prozess, so wird eine Unterbrechung veranlaßt, um zuerst die höhere Priorität ausführen zu können. Hierfür gibt es aber lediglich eine Warteschlange für Prozeßsteuerungen unterschiedlicher Priorität. (Troughton et al, "System X: The Processor Utility"; British Telecommunications Engineering; Bd. 3; Nr. 4; Januar 1985; London; Seiten 226-240).

Die zuvor beschriebene Anlage dient zur Verarbeitung einer immer größer werdenden Anzahl von Anforderungen an eine Vielzahl von Prozessoren. Eine größere Anzahl von Prozessoren, die somit in der Lage ist, mehr Nachrichten zu verarbeiten, ist aber teuer und bedarf einer speziellen Koordination der Zugriffe.

Rechnergesteuerte Anlagen weisen ein Betriebssystem auf, welches als Kern einen Ablaufteil oder auch Executivsystem genannt enthält, um den gesamten Ablauf von in Applikations-Programmodulen bereitgestellten Anwenderprogrammen zu koordinieren.

Zur Koordination enthält das Executivsystem einen Verteiler (Dispatcher). Da eine Vielzahl von Applikations-Programmodulen koordiniert werden müssen, bedient man sich einer Warteschlange, wobei die Verwaltung der Warteschlange so erfolgt, daß jedes Modul, d.h. jedes Programm Zeitscheiben (timeslicing) zugeteilt bekommt. Dazu werden solchen Programmen mit hoher Priorität eine sehr kurze Zeitspanne und entsprechend Programmen mit niedrigeren Prioritäten eine etwas längere Zeitspanne zur Verfügung gestellt (Bergmann, Lehrbuch der Fernmeldetechnik, Band 2, 5. Auflage 1986, S. 1546 - 1555, ISBN 3 7949 04052). Eine solche Zeitscheiben gesteuerte Warteschlange erfordert für das Betriebssystem einen hohen Verwaltungsaufwand, da die Ausführung der Applikationen durch das Betriebssystem unterbrochen und später an dieser Stelle fortgeführt werden muß und zusätzlich zwischen den untereinander kommunizierenden Prozessen Kommunikationsmechanismen verwaltet werden müssen.

Die technische Aufgabe gemäß der Erfindung besteht darin, ein Verfahren zum Verteilen von Nachrichten zum Aktivieren von Prozessen für eine Vielzahl von mit Nachrichten gesteuerten Applikations-Programmodulen so zu realisieren, daß eine Verteilung durch ein Betriebssystem unabhängig von der Ausführung der Prozesse in den Applikations-Programmodulen stattfindet.

Diese Aufgabe wird erfindungsgemäß durch die Lehre des Patentanspruchs 1 gelöst.

Da erfindungsgemäß zur Kommunikation zwischen den Applikations-Programmodulen nur Nachrichten ausgetauscht werden, die mit Hilfe einer Vielzahl (anstelle einer einzigen) von Nachrichten-Warteschlangen unterschiedlicher Prioritätsstufen nur nach Prioritätsgesichtspunkten verteilt werden, erfolgt eine wesentliche Verringerung der Durchlaufzeiten durch das Betriebssystem.

Außerdem erfolgt nur eine Aktivierung eines Applikationsprozesses, wenn auch eine Nachricht in einer Warteschlange ansteht, im Gegensatz zu Zeitscheibenzuteilungen an Module, die entsprechend ihrer Prioritäten, unabhängig davon, ob Nachrichten anstehen oder nicht, Zeitscheiben zugeilt bekommen.

Ferner ermöglicht dieses Verfahren in einfacher Weise Nachrichten zu verändern, hinzuzufügen oder zu löschen, da jedes Applikations-Programmodul ohne "Mitwirkung" des Betriebssystemes entsprechende Nachrichten in die Warteschlangen einbringen kann.

Es sind weiterhin nur eine geringe Anzahl von Daten zwischen dem Betriebssystem und den einzelnen Applikations-Programmodulen notwendig, so daß beim Austauschen oder Erweitern von Applikationen nur sehr einfache Änderungen im Betriebssystem erforderlich sind.

Weitere vorteilhafte Ausgestaltungen des Gegenstandes der Erfindung sind den Unteranssprüchen zu entnehmen.

Ein Ausführungsbeispiel wird im folgenden anhand der Zeichnungen erläutert. Es zeigen:
- Fig. 1: eine Prinzipdarstellung für ein Betriebssystem und zugehörigen Applikations-Programmodulen gemäß der Erfindung und
- Fig. 2: eine Organisationsdarstellung einer Warteschlange gemäß der Erfindung.

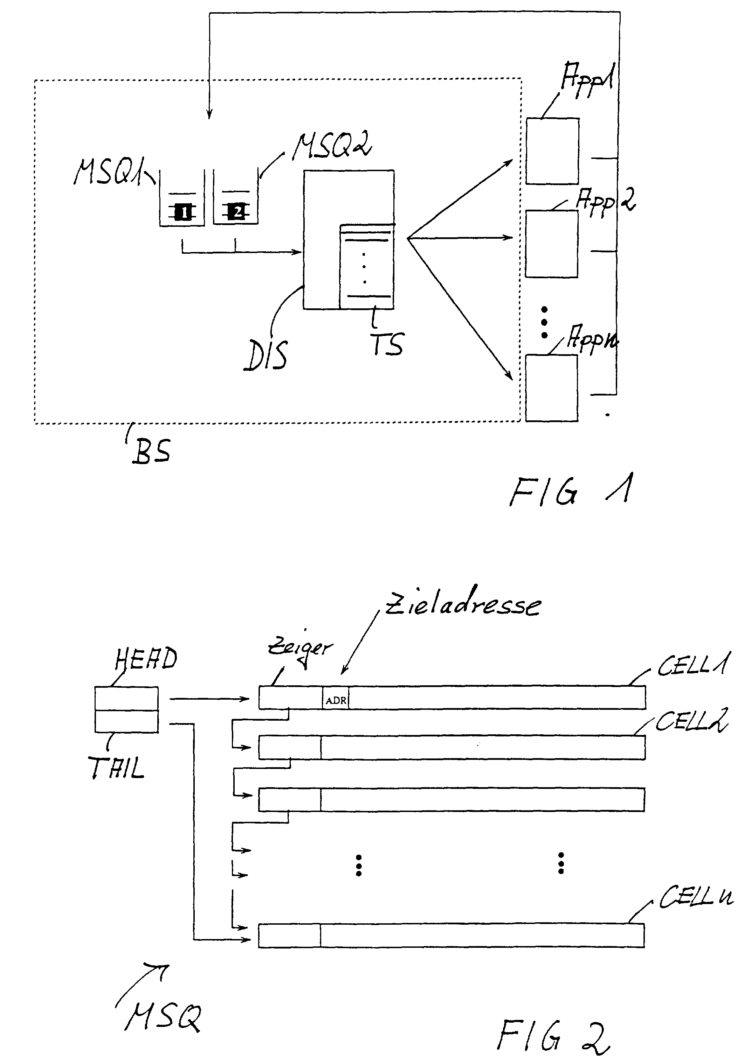

Ein Betriebssystem BS einer digitalen Telekommunikationsanlage, wie in Fig. 1 gezeigt, enthält eine erste Nachrichten-Warteschlange MSQ1 für Nachrichten einer höchsten Prioritätsstufe 1 und eine zweite Nachrichten-Warteschlange MSQ2 für Nachrichten untergeordneter Prioritätsstufen 2. Die zwei Nachrichten-Warteschlangen werden mittels eines nachgeordneten Verteilers DIS - im folgenden Dispatcher genannt - abgearbeitet, wie im folgenden beschrieben wird, in dem die Nachrichten mit Hilfe eines Tabellenspeichers TS auf eine Vielzahl von mit Nachrichten gesteuerten Applikations-Programmodulen App1, App2, ..., Appn verteilt werden.

Die Applikations-Programmodule steuern an sich bekannte Prozesse der Telekommunikationsanlage, wie z.B. für die Leitungssteuerung (Data Link Control), die Steuerung der Schicht 1-Umsetzung im ISDN (Layer 1 Control), die Steuerung für den Koppelfeldauf- und -abbau oder die Steuerung für eine interne Wartung.

Zur Verteilung von Nachrichten zum Aktivieren von Prozessen der mit Nachrichten gesteuerten (menage driven) Applikations-Programmodule läuft das erfindungsgemäße Verfahren wie folgt ab.

Wenn ein erstes Applikations-Programmodul App1 eine Nachricht mit einem zweiten Applikations-Programmodul App2 austauschen will, fordert das erste Modul App1 das Betriebssystems BS an. Daraufhin weist das Betriebssystem dem anfordernden Modul App1 eine freie Speicherzelle in einer Betriebsmittel-Warteschlange auf. Die Betriebsmittel-Warteschlange, nicht gezeigt, enthält eine Vielzahl von frei verfügbaren Speicherzellen und ist entsprechend der Nachrichten-Warteschlangen, wie Fig. 2 zeigt, aufgebaut (wird noch erläutert).

Gemäß einer vorteilhaften Weiterbildung sind eine erste Betriebsmittel-Warteschlange mit Speicherzellen für kleine Wortlängen und eine zweite Betriebsmittel-Warteschlange mit Speicherzellen für große Wortlängen vorgesehen. Somit können in der ersten Betriebsmittel-Warteschlange z.B. freie Speicherzellen für Nachrichten mit einer Wortlänge von 16 Oktetten, die für die Schicht-1-und-2-Behandlung in ISDN-Telekommunikationsanlagen benötigt werden, und in der zweiten Betriebsmittel-Warteschlange z.B. Speicherzellen für Nachrichten mit einer Wortlänge von 274 Oktetten, die für die Schicht-3-Behandlung benötigt werden, bereitgehalten werden.

Die freie Speicherzelle wird dann mit einer die Zieladresse - zweites Modul App2 - enthaltende Nachricht beschrieben und durch eine entsprechende Routine (Append Cell) an des Ende einer Nachrichten-Warteschlange angehängt.

Falls es sich um eine Nachricht höchster Prioritätsstufe 1 handelt, erfolgt ein Anhängen der Speicherzelle an die erste Nachrichten-Warteschlange MSQ1. Nachrichten untergeordneter Prioritätsstufen werden an die zweite Nachrichten-Warteschlange MSQ2 angehängt.

Die Nachrichten-Warteschlangen, bestehen aus einer Vielzahl von Speicherzellen Cell1, Cell2, ... Celln, die mittels eines Zeigers HEAD für die erste Speicherzelle Cell1 und eines Zeigers TAIL für die Letzte Speicherzelle Celln gemäß dem bekannten FIFO-Prinzip betrieben werden. Jede Speicherzelle zeigt dazu auf die nachfolgende Speicherzelle, wie in Fig. 2 gezeigt.

Durch die Routine Append Cell wird also die beschriebene Speicherzelle adressiert durch den Zeiger TAIL an das Ende der ersten Nachrichten-Warteschlange MSQ1 angefügt und der Zeiger auf die angehängte Speicherzelle eingestellt.

Die in den Nachrichten-Warteschlangen stehenden Nachrichten werden prioritätsgesteuert durch den Dispatcher DIS nach dem FIFO-Prinzip abgearbeitet. Der Zeiger HEAD, vgl. Fig. 2, adressiert jeweils die erste Speicherzelle CELL1 und wird anschließend auf die nächste Speicherzelle eingestellt. Die in der Speicherzelle stehende Zieladresse wird mit Hilfe des Tabellenspeichers TS, in dem für jedes Applikations-Programmodul eine Anfangsadresse abgespeichert ist und der ein Bestandteil des Dispatchers DIS ist, ausgewertet und die Speicherzelle an das betreffende Applikations-Programmodul, hier an das Modul App2, weitergeleitet. Danach übernimmt das entsprechende Modul App2 die alleinige Steuerung, d.h. unabhängig vom Betriebssystem und gibt erst nach erfolgter Prozessausführung, d.h. nach Abarbeitung der Nachricht, die Steuerung an das Betriebssystem BS zurück. Hierbei erfolgt in der Regel die Rückgabe der Speicherzelle mittels einer Routine (Return Cell), die ein Anhängen dieser Speicherzelle an die Betriebsmittel-Warteschlange des Betriebssystemes ausführt. Dadurch steht diese Speicherzelle wieder zur freien Verfügung.

Somit lassen sich auch jederzeit einfach Nachrichten verändern, ergänzen oder löschen, indem solche Korrekturen einfach in die Nachrichten-Warteschlangen eingefügt und wie zuvor beschrieben, weiterverteilt werden.

## Patentansprüche

1. Verfahren zum Verteilen von Nachrichten zum Aktivieren von Prozessen zwischen einer Vielzahl von mit Nachrichten gesteuerten Applikations-Programmodulen (App1, App2 ... Appn) über ein Betriebssystem (BS) einer rechnergesteuerten Anlage, insbesondere für eine digitale Telekommunikationsanlage, bestehend aus folgenden Schritten
- Anfordern des Betriebssystemes (BS) durch ein erstes Applikations-Programmodul (App1),
- Zuweisen einer freien Speicherzelle in einer Betriebsmittel-Warteschlange zum anfordernden ersten Modulapplikationsprogramm (App1),
- Beschreiben der freien Speicherzelle mit einer eine Zieladresse enthaltenden Nachricht,
- Anhängen dieser Speicherzelle an eine Nachrichten-Warteschlange (MSQ1) aus einer Vielzahl vom Betriebssystem verwalteten, unterschiedliche Prioritätsstufen aufweisenden Nachrichten-Wareteschlangen (MSQ1, MSQ2), die mittels eines noch geordneten Verteilers (DIS) abgearbeitet werden,
- prioritätsgesteuertes Verteilen der in den Nachrichten-Warteschlangen stehenden Speicherzellen durch den Verteiler (DIS), entsprechend der Zieladressen an weitere Applikations-Programmodule,
- Übernahme einer alleinigen Steuerung durch das weitere Applikations-Programmodul und
- Rückgabe der verteilten Speicherzellen durch das weitere zieladressierte Applikations-Programmodul nach erfolgter Prozessausführung an die Betriebsmittel-Warteschlange.

2. Verfahren nach Anspruch 1, mit folgenden Schritten
- jede Nachrichten-Warteschlange (MSQ1, MSQ2) wird nach dem FIFO-Prinzip betrieben,
- jede Speicherzelle der Warteschlange zeigt auf die nachfolgende Speicherzelle und
- der ersten Speicherzelle und der letzten Speicherzelle der Nachrichten-Warteschlange werden Zeiger (HEAD, TAIL) zugeordnet.

3. Verfahren nach Anspruch 2, mit folgendem Schritt
- jede mit einer die Zieladresse enthaltenen Nachricht beschriebene Speicherzelle der Betriebsmittel-Warteschlange wird, adressiert durch den der letzten Speicherzelle einer Nachrichten-Warteschlange zugeordneten Zeiger (TAIL), an das Ende einer Nachrichten-Warteschlange (MSQ1) angehängt.

4. Verfahren nach Anspruch 2, mit folgendem Schritt
- Verteilen der in den Nachrichten-Warteschlangen stehenden Speicherzellen mittels eines Verteilers (DIS) durch Auswertung der Zieladresse mit Hilfe
eines Tabellenspeichers (TS), in dem für jedes Applikations-Programmodul eine zugehörige Anfangsadresse abgespeichert ist.

5. Verfahren nach einem der vorhergehenden Ansprüche, mit folgenden Schritten
- Bereitstellen einer ersten Nachrichten-Warteschlange (MSQ1) für Nachrichten einer höchsten Prioritätsstufe (1) und
- Bereitstellen einer zweiten Nachrichten-Warteschlange (MSQ2) für Nachrichten untergeordneter Prioritätsstufen (2).

6. Verfahren nach einem der vorhergehenden Ansprüche mit folgenden Schritten
- Bereitstellen einer ersten Betriebsmittel-Warteschlange mit Speicherzellen für kleine Wortlängen und
- Bereitstellen einer zweiten Betriebsmittel-Warteschlange mit Speicherzellen für große Wortlängen.

## Claims

1. Method of distributing messages for activating processes between a plurality of message-controlled application program modules (App1, App2, ... Appn), via an operating system (BS) of a computer-controlled installation, in particular for a digital telecommunications installation, consisting of the following steps
- Call-up of the operating system (BS) by a first application program module (App1),
- Allocation of a free memory cell in a resource wait list to the calling-up first module application program (App1),
- Description of the free memory cell with a message containing a target address,
- Appending of this memory cell to a message waiting list (MSQ1) consisting of a plurality of message waiting lists (MSQ1, MSQ2) which are managed by the operating system, have different priority stages and are serviced by a still sequenced distributor (DIS),
- Priority-controlled distribution of the memory cells located in the message waiting lists by the distributor (DIS) to further application program modules according to target addresses,
- Acceptance of a single control by the further application program module and
- Return of the distributed memory cells by the further target-addressed application program module after process performance to the resource waiting list.

2. Method according to claim 1, with the following steps
- Each message waiting list (MSQ1, MSQ2) is operated by the FIFO principle,
- Each memory cell of the waiting list points to the subsequent memory cell and
- Pointers (HEAD, TAIL) are allocated to the first memory cell and the last memory cell of the message waiting list.

3. Method according to claim 2, with the following step
- Each memory cell of the resource waiting list described by a message containing the target address, addressed by the pointer (TAIL) allocated to the last memory cell of a message waiting list is appended to the end of a message waiting list (MSQ1).

4. Method according to claim 2, with the following step
- Distribution of the memory cells located in the message waiting lists by means of a distributor (DIS) by evaluation of the target address with the aid of a table memory (TS) in which an associated starting address is stored for each application program module.

5. Method according to one of the preceding claims, with the following steps
- Provision of a first message waiting list (MSQ1) for messages from a maximum priority stage (1) and
- Provision of a second message waiting list (MSQ2) for messages from inferior priority stages (2).

6. Method according to one of the preceding claims with the following stages
- Provision of a first resource waiting list with memory cells for short words and
- Provision of a second resource waiting list with memory cells for long words.

## Revendications

1. Procédé de répartition d'informations pour l'activation de processus parmi une multiplicité de modules-programmes d'application commandés par des informations (App1, App2, ... Appn) par l'intermédiaire d'un système d'exploitation (BS) d'une installation commandée par ordinateur, en particulier pour une installation de télécommunication numérique, comprenant les étapes suivantes :
- demande du système d'exploitation (BS) par un premier module-programme d'application (App1),
- affectation d'une cellule de mémoire libre dans une file d'attente du moyen d'exploitation au premier programme d'application module (App1),
- écriture dans la cellule de mémoire libre d'une information contenant une adresse de destination,
- accrochage de cette cellule de mémoire à une file d'attente d'informations (MSQ1) parmi une multiplicité de files d'attente d'informations (MSQ1, MSQ2) gérées par le système d'exploitation et présentant différents niveaux de priorité, files d'attente qui sont traitées au moyen d'un répartiteur (DIS) encore ordonné,
- répartition avec commande prioritaire des cellules de mémoire se trouvant dans les files d'attente d'informations par l'intermédiaire du répartiteur (DIS), en fonction des adresses de destination, à des modules-programmes d'application suivants,
- prise en charge d'une commande unique par le module-programme d'application suivant, et
- restitution à la file d'attente du système d'exploitation des cellules de mémoire réparties par le module programme d'application suivant comportant des adresses de destination, une fois l'exécution du processus réussie.

2. Procédé suivant la revendication 1, comportant les étapes suivantes :
- chaque file d'attente d'informations (MSQ1, MSQ2) est exploitée suivant le principe FIFO (premier entré / premier sorti),
- chaque cellule de mémoire de la file d'attente indique la prochaine cellule de mémoire, et
- des curseurs (HEAD, TAIL) sont affectés à la première cellule de mémoire et à la dernière cellule de mémoire de la file d'attente d'informations.

3. Procédé suivant la revendication 2, comportant les étapes suivantes :
- chaque cellule de mémoire de la file d'attente du système d'exploitation dans laquelle est écrite l'information contenant une caresse de destination est accrochée à l'extrémité d'une file d'attente d'informations (MSQ1) en étant adressée par le curseur (TAIL) affecté à la dernière cellule de mémoire d'une file d'attente d'informations.

4. Procédé suivant la revendication 2, comportant l'étape suivante :
- répartition des cellules de mémoire se trouvant dans les files d'attente d'informations au moyen d'un répartiteur (DIS) par évaluation de l'adresse de destination à l'aide d'un registre de tables (IS) dans lequel est enregistré pour chaque module-programme d'application une adresse de début correspondante.

5. Revendication suivant l'une des revendications précédentes, comportant les étapes suivantes :
- mise à disposition d'une première file d'attente d'informations (MSQ1) pour des informations d'un niveau de priorité des plus élevés (1) et
- mise à disposition d'une deuxième file d'attente d'informations (MSQ2) pour des informations de niveaux de priorité subordonnés (2).

6. Procédé suivant l'une des revendications précédentes, comportant les étapes suivantes :
- mise à disposition d'une première file d'attente de système d'exploitation comportant des cellules de mémoire pour de petites longueurs de mots et
- mise à disposition d'une deuxième file d'attente de système d'exploitation comportant des cellules de mémoire pour de grandes longueurs de mots.
